# EUROPÄISCHE PATENTSCHRIFT

(11) **EP 2 976 220 B1**
(45) Veröffentlichungstag und Bekanntmachung des Hinweises auf die Patenterteilung: **08.05.2019**
(21) Anmeldenummer: 14710573.8
(22) Anmeldetag: 17.03.2014
(51) Int. Cl.: F28F 1/12, H01M 10/6556, H01M 10/6554

(54) **VERFAHREN ZUR HERSTELLUNG VON VERBUNDENEN WÄRMEÜBERTRAGERELEMENTEN**
METHOD FOR PRODUCING CONNECTED HEAT EXCHANGER ELEMENTS
PROCÉDÉ POUR PRODUIRE DES ÉLÉMENTS ÉCHANGEURS DE CHALEUR COUPLÉS

(30) Priorität: 18.03.2013 DE 202013101450 U; 05.04.2013 DE 102013206056
(43) Veröffentlichungstag der Anmeldung: 27.01.2016
(73) Patentinhaber: Mahle International GmbH, 70376 Stuttgart (DE)
(72) Erfinder: SCHIEHLEN, Thomas, 89174 Altheim (DE)
(74) Vertreter: Grauel, Andreas
(86) Internationale Anmeldenummer: PCT/EP2014/055332
(87) Internationale Veröffentlichungsnummer: WO 2014/147035

(56) Entgegenhaltungen:
- EP-A2- 1 233 245
- DE-A1- 10 228 697
- DE-A1-102008 019 556
- DE-A1-102011 079 586
- JP-A- 2007 136 292
- US-A- 5 058 665

## Beschreibung

### Technisches Gebiet

Die Erfindung betrifft ein Verfahren zur Herstellung von verbundenen Wärmeübertragerelementen, gemäß dem Oberbegriff des Anspruchs 1, solche verbundenen Wärmeübertragerelementen und einen Wärmeübertrager mit solchen verbundenen Wärmeübertragerelementen. DE 10 2008 019 556 offenbart ein derartiges Verfahren.

### Stand der Technik

Im Stand der Technik sind seit Jahrzehnten Wärmeübertrager für Kältemittelanwendungen oder für Kühlmittelanwendung bekannt. Dabei erfolgt die Fertigung dieser Wärmeübertrager mit Werkstoffen, die sich für eine Verlötung eignen, da die Lötung zur Abdichtung der Bauelemente eingesetzt wird. Als Werkstoffe sind Edelstahl, Kupfer oder Aluminium bekannt. Diese Werkstoffe werden als Halbzeuge mit Lot beschichtet, wobei das Lot aus einer Materialschicht, die einen niedrigeren Schmelzpunkt, als das Grundmaterial aufweist, besteht.

Die Bauelemente werden montiert, kassettiert und verspannt und anschließend in einem Lötofen bei einer Temperatur gelötet, die nahe an den Schmelzpunkt des Grundmaterials heranreicht. Auch werden für den Lötprozess Flussmittel eingesetzt, um die oberflächliche Oxidschicht aufzubrechen.

Bei der Verlötung von Bauelementen ist eine Randbedingung, dass sich nur artgleiche Materialien miteinander geeignet verbinden, weil die thermische Längendehnung verschiedener Materialien das gelötete Bauteil ungünstig beeinflussen könnte.

Ebenso sollten aus korrosionstechnischer Sicht keine Potentialunterschiede von variierenden Materialien vorhanden sein.

Die Verlötung kann erfolgreich durchgeführt werden, wenn verschiedene Randbedingungen eingehalten werden:
- Entfetten der Teile
- Stapeln und Verspannen der lotplattierten Bauteile
- Lötung im Ofen bei etwa 650°C für mehrere Stunden, vorzugsweise 4 Stunden
- Dichtprüfen der Teile
- Bedarfsweises Nachlöten, wenn die Teile undicht sein sollten

Dieser Herstellungsprozess ist sehr zeit- und kostenintensiv.

Das Verbinden unterschiedlicher Materialien mit unterschiedlicher Wärmeausdehnung sorgt bei Wärmetauschern mit häufigen thermischen Wechseln zu einer reduzierten Lebensdauer.

Alternativ werden Bauteile nach dem Stand der Technik auch geklebt. Dazu werden Epoxidharzklebstoffe, Silikone oder Polyurethane eingesetzt, die über einen breiten Temperaturbereich eine geeignete Flexibilität zeigen, die vorteilhaft ist für einen Ausgleich verschiedener thermischer Längendehnungen. Für eine Klebung werden die Klebstoffe in Schichtdicken von mehr als 1mm aufgetragen. Dadurch werden lange Aushärtezeiten der Klebstoffe benötigt, was die Kosten für die Aushärtung wegen langer Ofenzeit oder wegen noch längerer Aushärtezeit bei Raumtemperatur erhöht. Auch wird beim Einsatz von hohen Schichtdicken von mehr als 1mm sehr viel Klebstoffmenge verwendet, was die Kosten ebenso ansteigen lässt.

Geklebte Bauteile besitzen derzeit allerdings nur eine begrenzte Medienbeständigkeit gegen die in einem Wärmeübertrager eingesetzten Medien.

### Darstellung der Erfindung, Aufgabe, Lösung, Vorteile

Daher ist es die Aufgabe der vorliegenden Erfindung, ein Verfahren zur Herstellung von verbundenen Wärmeübertragerelementen, solche verbundenen Wärmeübertragerelementen und einen Wärmeübertrager mit solchen verbundenen Wärmeübertragerelementen zu schaffen, die einfach herzustellen sind und welche die Nachteile des Standes der Technik reduzieren.

Die Aufgabe der vorliegenden Erfindung wird hinsichtlich der verbundenen Wärmeübertragerelemente mit den Merkmalen gemäß Anspruch 1 gelöst.

Die Erfindung betrifft ein Verfahren zur Herstellung von verbundenen Wärmeübertragerelementen, mit einem ersten Wärmeübertragerelement und mit einem zweiten Wärmeübertragerelement, wobei die beiden Wärmeübertragerelemente an jeweiligen Kontaktflächen miteinander verbindbar sind, an zumindest einem der Wärmeübertragerelemente an der Kontaktfläche eine flächige etwa 10µm bis 500µm starke Klebstoffschicht aufgetragen ist und die beiden zu verbindenden Wärmeübertragerelemente an den Kontaktflächen unter Zwischenlage der Klebstoffschicht aufeinander gelegt werden. Durch die dünne Klebstoffschicht wird eine sichere und stabile Verklebung erreicht, welche auch die Anforderungen an die Dauerhaltbarkeit erfüllt. Dabei wird der Klebstoff als Folienmaterial zwischen den zu verbindenden Wärmeübertragerelementen aufgebracht. Dadurch kann eine qualitativ hochwertige Verarbeitung realisiert werden und auch kann die Klebstoffmenge sehr gleichmäßig aufgetragen werden.

Besonders vorteilhaft ist es, wenn die Klebstoffschicht etwa 10µm bis 100µm stark ist. Dies reduziert das benötigte Material und erhöht die Stabilität.

Erfindungsgemäß erfolgt das Zusammenfügen der Wärmeübertragerelemente bei einer Temperatur von ca. 100°C bis 200°C oder die zu verbindenden Wärmeübertragerelemente werden nach dem Zusammenfügen auf eine Temperatur von 100°C bis 200°C, für eine vorgebbare Zeitdauer erwärmt. Durch die Erwärmung auf die zuvor definierte Temperatur kann eine schnellere Härtung und eine höhere Stabilität des Klebstoffs erreicht werden.

Besonders vorteilhaft erfolgt das Zusammenfügen bei einer Temperatur von ca. 120 °C bis 180°C oder die zu verbindenden Wärmeübertragerelemente werden nach dem Zusammenfügen auf eine Temperatur von 120°C bis 180°C, für eine vorgebbare Zeitdauer erwärmt.

Besonders bevorzugt ist es, wenn der Klebstoff auf das Halbzeug zumindest eines Wärmetauscherelements aufgebracht wird, wie auf ein auf einem Coil gewickelten Band oder Rohr oder auf ein Strangmaterial. Dadurch kann der Klebstoffauftrag vor der Formgebung kostengünstig aufgetragen werden, wobei die Wärmeübertragerelemente danach beispielsweise ausgestanzt oder ausgeformt werden.

Auch ist es vorteilhaft, wenn der Klebstoff als Klebstofffolie auf eine Oberfläche des Wärmeübertragerelements oder des Halbzeugs aufgetragen oder aufkaschiert wird. Auch dadurch kann eine gleichmäßige Klebstoffdicke erreicht werden, was die Qualität der Klebung sicherstellt.

Die Aufgabe hinsichtlich der verbundenen Wärmeübertragerelemente wird mit den Merkmalen von Anspruch 7 gelöst.

Ein Ausführungsbeispiel der Erfindung betrifft verbundene Wärmeübertragerelemente mit zumindest einem ersten Wärmeübertragerelement und zumindest einem zweiten Wärmeübertragerelement, welche mittels einer Klebstoffschicht miteinander verbunden sind, wobei ein oben beschriebenes Verfahren zur Herstellung eingesetzt wird.

Dabei ist es vorteilhaft, wenn das erste Wärmeübertragerelement und/oder das zweite Wärmeübertragerelement ein Rohr ist.

Auch ist es vorteilhaft, wenn das erste Wärmeübertragerelement und/oder das zweite Wärmeübertragerelement eine Rippe, wie bevorzugt eine Wellrippe, ist.

Weiterhin ist es zweckmäßig, wenn das erste Wärmeübertragerelement und/oder das zweite Wärmeübertragerelement eine Platte, wie bevorzugt eine geformte oder gepresste oder geprägte Platte oder Substrat-Platte, ist.

Besonders vorteilhaft ist es, wenn die Wärmeübertragerelemente einen Fluidkanal bilden oder eine abgedichtete Verbindung eingehen, wobei der Klebstoff entsprechend als Dichtmittel dient. So kann ein Fluidkanal aus zwei Elementen gebildet werden, die mittels des Klebstoffs randseitig abgedichtet werden.

Die Aufgabe zum Wärmeübertrager wird gelöst mit den Merkmalen von Anspruch 12.

Ein Ausführungsbeispiel betrifft einen Wärmeübertrager mit zumindest einem der verbundenen Wärmeübertragerelemente, insbesondere hergestellt nach einem oben beschriebenen Verfahren.

Bei dem Wärmeübertrager ist es vorteilhaft, wenn der Wärmeübertrager ein Schichtblechwärmeübertrager ist, bei welchem Schichten von Platten aufeinander gestapelt sind, zwischen welchen Fluidkanäle ausgebildet sind.

Auch ist es vorteilhaft, wenn der Wärmeübertrager ein Rohr-Rippen-Wärmeübertrager ist, bei welchem Rohre mit benachbart angeordneten Rippen versehen angeordnet sind, wobei ein Fluid in den Rohren und ein Fluid um die Rohre und Rippen strömt.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von einem Ausführungsbeispiel unter Bezugnahme auf eine Zeichnung detailliert erläutert. In der Zeichnung zeigt:
- Fig. 1: eine schematische Darstellung einer Verklebung eines ersten Wärmeübertragerelements mit einem zweiten Wärmeübertragerelement,
- Fig. 2: eine schematische Darstellung einer Verklebung eines ersten Wärmeübertragerelements mit einen zweiten Wärmeübertragerelement, und
- Fig. 3: ein Diagramm zur Erläuterung des erfinderischen Verfahrens.

### Bevorzugte Ausführung der Erfindung

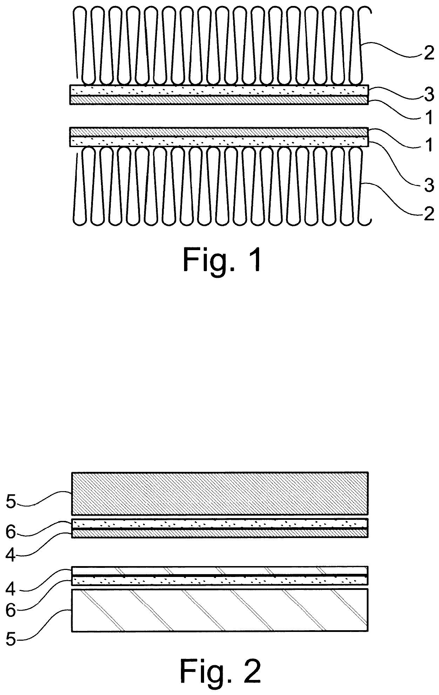

Die Figur 1 zeigt eine Anordnung eines ersten Wärmeübertragerelements 1 mit einem zweiten Wärmeübertragerelement 2, welche mittels einer dünnen Klebstoffschicht 3 miteinander verbunden sind.

Die Klebstoffschicht 3 wird dazu vorteilhaft als dünne Folie oder als dünner Film auf mindestens eines der beiden Wärmeübertragerelemente 1, 2 aufgebracht und anschließend werden die beiden Wärmeübertragerelemente 1, 2 miteinander verbunden.

Das erste Wärmeübertragerelement 1 ist als Rohr ausgebildet und das zweite Wärmeübertragerelement 2 ist als Wellrippe ausgebildet. Die Klebstoffschicht 3 wird in dieser Anwendung vorteilhaft auf das eher ebene Rohr als erstes Wärmeübertragerelement aufgebracht. Dies erlaubt eine sparsame Auftragung bzw. Applikation des Klebstoffs.

Im Ausführungsbeispiel der Figur 2 wird auf ein Rohr 4 mittels einer dünnen Klebstoffschicht 6 ein Substrat aufgeklebt.

Die Klebstoffschicht ist bei den Ausführungsbeispielen bevorzugt zwischen etwa 10µm und 500µm, besonders bevorzugt zwischen 10µm und 100µm stark.

Zum Einsatz kommen Klebstofffolien als Klebstoffschicht 3, 6, welche auf eine Kontaktfläche eines Wärmeübertragerelements 1, 4 aufgebracht wird, wobei das zweite Wärmeübertragerelement 2, 5 mit seiner Kontaktfläche dann mit der Klebstoffschicht 3, 6 auf der Kontaktfläche des ersten Wärmeübertragerelements 1, 4 aufgebracht wird.

Dabei kann die Klebstoffschicht erst auf das erste Wärmeübertragerelement aufgebracht werden, bevor die beiden zu verbindenden Wärmeübertragerelemente zusammengeführt werden.

Dabei ist es auch vorteilhaft, wenn die Klebstoffschicht bereits auf das Ausgangsmaterial aufgebracht wird, wie auf das Halbzeug. So kann beispielsweise die Klebstoffschicht auf ein Blech oder ein Rohr aufgebracht werden, welches beispielsweise als auf ein Coil gewickelte Menge für den Herstellungsprozess vorliegt. Dabei kann der Auftrag in Großserie kostengünstig aufgebracht werden. Vorteilhaft ist es, wenn die Wärmeübertragerelemente beispielsweise aus dem Halbzeug mittels Stanzen und Prägen bzw. Verformen und/oder Strahlschneiden herstellbar ist. So können beispielsweise Wärmeübertragerplatten, auch als Scheiben bezeichnet, mit der Klebstoffschicht aus einem Blech hergestellt werden, auf welches zuvor die Klebstoffschicht bereits appliziert war.

Alternativ kann die Klebstoffschicht auch zwischen die beiden zu verbindenden Wärmeübertragerelemente als insbesondere formstabile Folie gelegt werden, so dass sie beim Zusammenfügen sich auf die zu verbindenden Kontaktflächen legt.

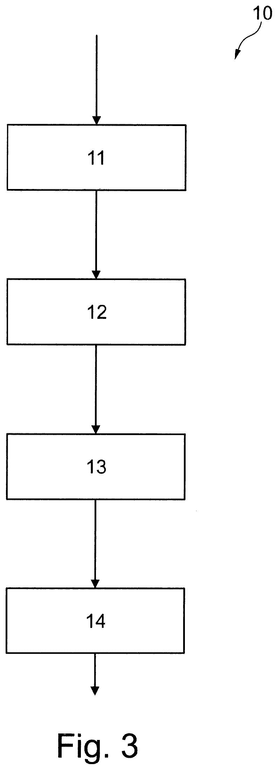

Die Figur 3 zeigt in einem Diagramm 10 einen beispielhaften Verfahrensablauf eines erfindungsgemäßen Verfahrens zur Herstellung von verbundenen Wärmeübertragerelementen.

Dazu wird in Block 11 auf zumindest einem ersten Wärmeübertragerelement und/oder auf einem zweiten Wärmeübertragerelement eine dünne Klebstoffschicht aufgebracht.

Anschließend werden die beiden Wärmeübertragerelemente in Block 12 aufeinander gelegt bzw. zusammengeführt, um die Wärmeübertragerelemente zu verkleben.

Die Klebstoffschicht ist etwa 10µm bis 500µm, vorzugsweise 10µm bis 100µm stark.

Optional kann gemäß Block 13 das Zusammenfügen der Wärmeübertragerelemente bei einer Temperatur von ca. 100°C bis 200°C, insbesondere 120°C bis 180°C, erfolgen. Die Erwärmung erfolgt vorzugsweise über eine vordefinierte Zeitdauer.

Auch können die zu verbindenden Wärmeübertragerelemente alternativ nach dem Zusammenfügen auf eine Temperatur von 100°C bis 200°C, insbesondere 120°C bis 180°C, für eine vorgebbare Zeitdauer erwärmt werden.

Die vorgebbare Zeitdauer ist dabei etwa 10 Minuten oder weniger, insbesondere 5 Minuten oder weniger.

Weiterhin optional kann gemäß Block 14 während des Verbindungsprozesses, beim Zusammenfügen, ein Druck im Bereich von etwa 0,1 N/mm² bis 0,7 N/mm² auf die zu verbindenden Wärmeübertragerelemente aufgebracht werden.

Erfindungsgemäß kann ein Wärmeübertrager mit solchen verbundenen Wärmeübertragerelementen hergestellt werden. Dabei kann der Wärmeübertrager ein Verdampfer, Kühlmittelkühler, Motorkühler, Kondensator, Ladeluftkühler, Chiller, Ölkühler, Heizkörper, PTC-Zuheizer etc. sein.

Die Verklebung kann für eine Rippe-Rohr-Verklebung, eine Aktivkohleverklebung oder eine Scheiben- oder Plattenverklebung zur Strömungskanalbildung genutzt werden.

## Patentansprüche

1. Verfahren zur Herstellung von verbundenen Wärmeübertragerelementen (1,2,4,5), mit einem ersten Wärmeübertragerelement (1,4) und mit einem zweiten Wärmeübertragerelement (2,5), wobei die beiden Wärmeübertragerelemente an jeweiligen Kontaktflächen miteinander verbindbar sind, an einem der Wärmeübertragerelemente (1,2,4,5) an der Kontaktfläche eine flächige etwa 10µm bis 500µm starke Klebstoffschicht (3,6) aufgetragen ist und die beiden zu verbindenden Wärmeübertragerelemente (1,2,4,5) an den Kontaktflächen unter Zwischenlage der Klebstoffschicht (3) aneinander gefügt werden, **dadurch gekennzeichnet, dass** der Klebstoff als Folienmaterial zwischen den zu verbindenden Wärmeübertragerelementen (1,2,4,5) aufgebracht wird.

2. Verfahren nach Anspruch 1, **dadurch gekennzeichnet, dass** die Klebstoffschicht (3) etwa 10µm bis 100µm stark ist.

3. Verfahren nach Anspruch 1 oder 2, **dadurch gekennzeichnet, dass** das Zusammenfügen der Wärmeübertragerelemente (1,2,4,5) bei einer Temperatur von ca. 100°C bis 200°C erfolgt oder dass die zu verbindenden Wärmeübertragerelemente (1,2,4,5) nach dem Zusammenfügen auf eine Temperatur von 100°C bis 200°C für eine vorgebbare Zeitdauer erwärmt werden.

4. Verfahren nach Anspruch 1 oder 2, **dadurch gekennzeichnet, dass** das Zusammenfügen bei einer Temperatur von ca. 120°C bis 180°C erfolgt oder dass die zu verbindenden Wärmeübertragerelemente (1,2,4,5) nach dem Zusammenfügen auf eine Temperatur von 120°C bis 180°C für eine vorgebbare Zeitdauer erwärmt werden.

5. Verfahren nach zumindest einem der vorhergehenden Ansprüche, **dadurch gekennzeichnet, dass** der Klebstoff auf das Halbzeug zumindest eines Wärmetauscherelements (1,2,4,5) aufgebracht wird, wie auf ein auf einem Coil gewickelten Band oder Rohr oder auf ein Strangmaterial.

6. Verfahren nach einem der Ansprüche 1 bis 5, **dadurch gekennzeichnet, dass** der Klebstoff als Klebstofffolie auf eine Oberfläche des Wärmeübertragerelements (1,2,4,5) oder des Halbzeugs aufgetragen oder aufkaschiert wird.

7. Verbundene Wärmeübertragerelemente mit zumindest einem ersten Wärmeübertragerelement (1,4) und zumindest einem zweiten Wärmeübertragerelement (2,5), welche mittels einer Klebstoffschicht (3,6) miteinander verbunden sind, wobei ein Verfahren zur Herstellung gemäß zumindest einem der Ansprüche 1 bis 6 eingesetzt wird.

8. Verbundene Wärmeübertragerelemente nach Anspruch 7, **dadurch gekennzeichnet, dass** das erste Wärmeübertragerelement (1,4) und/oder das zweite Wärmeübertragerelement (2,5) ein Rohr ist.

9. Verbundene Wärmeübertragerelemente nach Anspruch 7 oder 8, **dadurch gekennzeichnet, dass** das erste Wärmeübertragerelement (1,4) und/oder das zweite Wärmeübertragerelement (2,5) eine Rippe, wie bevorzugt eine Wellrippe, ist.

10. Verbundene Wärmeübertragerelemente nach Anspruch 7, 8 oder 9, **dadurch gekennzeichnet, dass** das erste Wärmeübertragerelement (1,4) und/oder das zweite Wärmeübertragerelement (2,5) eine Platte, wie bevorzugt eine geformte oder gepresste oder geprägte Platte ist.

11. Verbundene Wärmeübertragerelemente nach zumindest einem der Ansprüche 7 bis 10, **dadurch gekennzeichnet, dass** die Wärmeübertragerelemente (1,2,4,5) einen Fluidkanal bilden oder eine abgedichtete Verbindung eingehen, wobei der Klebstoff als Dichtmittel dient.

12. Wärmeübertrager mit zumindest einem der verbundenen Wärmeübertragerelemente gemäß einem der vorhergehenden Ansprüche 7 bis 11, hergestellt nach einem Verfahren nach zumindest einem der vorhergehenden Ansprüche 1 bis 6.

13. Wärmeübertrager nach Anspruch 12, **dadurch gekennzeichnet, dass** der Wärmeübertrager ein Schichtblechwärmeübertrager ist, bei welchem Schichten von Platten aufeinander gestapelt sind, zwischen welchen Fluidkanäle ausgebildet sind.

14. Wärmeübertrager nach Anspruch 12, **dadurch gekennzeichnet, dass** der Wärmeübertrager ein Rohr-Rippen-Wärmeübertrager ist, bei welchem Rohre mit benachbart angeordneten Rippen versehen angeordnet sind, wobei ein Fluid in den Rohren und ein Fluid um die Rohre und Rippen strömt.

## Claims

1. A method for producing connected heat exchanger elements (1, 2, 4, 5), with a first heat exchanger element (1, 4) and with a second heat exchanger element (2, 5), wherein the two heat exchanger elements can be connected to one another at respective contact surfaces, wherein a flat adhesive layer (3, 6) which is about 10 µm to 500 µm thick is applied to the contact surface of one of the heat exchanger elements (1, 2, 4, 5) and the two heat exchanger elements (1, 2, 4, 5) which are to be connected are joined together at the contact surfaces with the adhesive layer (3) in between, **characterised in that** the adhesive is applied as a film material between the heat exchanger elements (1, 2, 4, 5) which are to be connected.

2. The method according to claim 1, **characterised in that** the adhesive layer (3) is about 10 µm to 100 µm thick.

3. The method according to claim 1 or 2, **characterised in that** the joining of the heat exchanger elements (1, 2, 4, 5) happens at a temperature of about 100 °C to 200 °C or that the heat exchanger elements (1, 2, 4, 5) which are to be connected are heated to a temperature of 100 °C to 200 °C for a predeterminable time period after joining them.

4. The method according to claim 1 or 2, **characterised in that** the joining happens at a temperature of about 120 °C to 180 °C or that the heat exchanger elements (1, 2, 4, 5) which are to be connected are heated to a temperature of 120 °C to 180 °C for a predeterminable time period after joining them.

5. The method according to at least one of the preceding claims, **characterised in that** the adhesive is applied to the semi-finished product of at least one heat exchanger element (1, 2, 4, 5), such as to a strip or tube, which is wrapped around a coil or to a string material.

6. The method according to one of claims 1 to 5, **characterised in that** the adhesive is applied or laminated as an adhesive film to a surface of the heat exchanger element (1, 2, 4, 5) or of the semi-finished product.

7. Connected heat exchanger elements with at least one first heat exchanger element (1, 4) and at least one second heat exchanger element (2, 5) which are connected to one another by means of an adhesive layer (3, 6), wherein a method for producing according to at least one of claims 1 to 6 is used.

8. The connected heat exchanger elements according to claim 7, **characterised in that** the first heat exchanger element (1, 4) and/or the second heat exchanger element (2, 5) is a tube.

9. The connected heat exchanger elements according to claim 7 or 8, **characterised in that** the first heat exchanger element (1, 4) and/or the second heat exchanger element (2, 5) is a rib such as preferably a corrugated rib.

10. The connected heat exchanger elements according to claim 7, 8 or 9, **characterised in that** the first heat exchanger element (1, 4) and/or the second heat exchanger element (2, 5) is a plate such as preferably a formed or pressed or embossed plate.

11. The connected heat exchanger elements according to at least one of claims 7 to 10, **characterised in that** the heat exchanger elements (1, 2, 4, 5) form a fluid channel or coalesce in a sealing manner, wherein the adhesive serves as a sealant.

12. A heat exchanger with at least one of the connected heat exchanger elements according to one of the preceding claims 7 to 11, produced according to a method according to at least one of the preceding claims 1 to 6.

13. The heat exchanger according to claim 12, **characterised in that** the heat exchanger is a layer sheet heat exchanger, wherein layers of plates, between which fluid channels are formed, are stacked one atop another.

14. The heat exchanger according to claim 12, **characterised in that** the heat exchanger is a tube rib heat exchanger, wherein tubes provided with adjacently arranged ribs are arranged, wherein a fluid flows inside the tubes and a fluid flows around the tubes and ribs.

## Revendications

1. Procédé de fabrication d'éléments d'échangeur de chaleur assemblés (1, 2, 4, 5), comprenant un premier élément d'échangeur de chaleur (1, 4) et un deuxième élément d'échangeur de chaleur (2, 5), où les deux éléments d'échangeur de chaleur peuvent être assemblés l'un à l'autre au niveau de surfaces de contact respectives, une couche de colle (3, 6) d'une épaisseur comprise entre 10 µm et 500 µm environ étant appliquée, sur une grande étendue, sur l'un des éléments d'échangeur de chaleur (1, 2, 4, 5) au niveau de la surface de contact, et les deux éléments d'échangeur de chaleur (1, 2, 4, 5) à assembler sont joints l'un à l'autre grâce à l'interposition de la couche de colle (3) placée au niveau des surfaces de contact, **caractérisé en ce que** la colle, en tant que matériau en feuille, est appliquée entre les éléments d'échangeur de chaleur (1, 2, 4, 5) à assembler.

2. Procédé selon la revendication 1, **caractérisé en ce que** la couche de colle (3) est d'une épaisseur comprise entre 10 µm et 100 µm environ.

3. Procédé selon la revendication 1 ou 2, **caractérisé en ce que** l'assemblage des éléments d'échangeur de chaleur (1, 2, 4, 5) est réalisé à une température comprise entre 100°C et 200°C environ, ou bien **en ce que** les éléments d'échangeur de chaleur (1, 2, 4, 5) à assembler sont chauffés, après l'assemblage, à une température comprise entre 100°C et 200°C pendant une période de temps pouvant être prédéfinie.

4. Procédé selon la revendication 1 ou 2, **caractérisé en ce que** l'assemblage est réalisé à une température comprise entre 120°C et 180°C environ, ou bien **en ce que** les éléments d'échangeur de chaleur (1, 2, 4, 5) à assembler sont chauffés, après l'assemblage, à une température comprise entre 120°C et 180°C pendant une période de temps pouvant être prédéfinie.

5. Procédé selon au moins l'une quelconque des revendications précédentes, **caractérisé en ce que** la colle est appliquée sur le produit semi-fini d'au moins un élément d'échangeur de chaleur (1, 2, 4, 5), comme sur une bande enroulée sur une bobine, ou bien comme sur un tube ou sur un matériau extrudé.

6. Procédé selon l'une quelconque des revendications 1 à 5, **caractérisé en ce que** la colle, en tant que feuille de colle, est appliquée ou contrecollée sur une surface de l'élément d'échangeur de chaleur (1, 2, 4, 5) ou du produit semi-fini.

7. Eléments d'échangeur de chaleur assemblés comprenant au moins un premier élément d'échangeur de chaleur (1, 4) et au moins un deuxième élément d'échangeur de chaleur (2, 5), éléments qui sont assemblés l'un à l'autre au moyen d'une couche de colle (3, 6), où l'on utilise un procédé de fabrication selon au moins l'une quelconque des revendications 1 à 6.

8. Eléments d'échangeur de chaleur assemblés selon la revendication 7, **caractérisés en ce que** le premier élément d'échangeur de chaleur (1, 4) et / ou le deuxième élément d'échangeur de chaleur (2, 5) est un tube.

9. Eléments d'échangeur de chaleur assemblés selon la revendication 7 ou 8, **caractérisés en ce que** le premier élément d'échangeur de chaleur (1, 4) et / ou le deuxième élément d'échangeur de chaleur (2, 5) est une ailette telle que, de préférence, une ailette ondulée.

10. Eléments d'échangeur de chaleur assemblés selon la revendication 7, 8 ou 9, **caractérisés en ce que** le premier élément d'échangeur de chaleur (1, 4) et / ou le deuxième élément d'échangeur de chaleur (2, 5) est une plaque telle que, de préférence, une plaque moulée ou pressée ou gaufrée.

11. Eléments d'échangeur de chaleur assemblés selon au moins l'une quelconque des revendications 7 à 10, **caractérisés en ce que** les éléments d'échangeur de chaleur (1, 2, 4, 5) forment un conduit de fluide ou bien se combinent pour former un assemblage rendu étanche, où la colle sert de moyen d'étanchéité.

12. Echangeur de chaleur comprenant au moins l'un des éléments d'échangeur de chaleur assemblés selon l'une quelconque des revendications précédentes 7 à 11, fabriqué selon un procédé conforme à au moins l'une quelconque des revendications précédentes 1 à 6.

13. Echangeur de chaleur selon la revendication 12, **caractérisé en ce que** l'échangeur de chaleur est un échangeur de chaleur en tôle stratifiée, échangeur dans lequel des couches de plaques sont empilées les unes sur les autres, plaques entre lesquelles sont formés des conduits de fluide.

14. Echangeur de chaleur selon la revendication 12, **caractérisé en ce que** l'échangeur de chaleur est un échangeur de chaleur à tubes et à ailettes, échangeur dans lequel des tubes sont disposés en étant dotés d'ailettes disposées de façon adjacente, où un fluide circule dans les tubes et un fluide circule autour des tubes et des ailettes.
